# EUROPEAN PATENT SPECIFICATION

(11) **EP 4 187 877 B1**
(45) Date of publication and mention of the grant of the patent: **30.04.2025**
(21) Application number: 21845873.5
(22) Date of filing: 20.07.2021
(51) Int. Cl.: H04L 65/40, H04L 41/00, H04L 67/141, H04L 41/0816, H04L 67/303, H04L 69/40, H04L 101/663

(54) **METHOD AND APPARATUS FOR ESTABLISHING COMMUNICATION CONNECTION, AND DEVICE, AND COMPUTER READABLE STORAGE MEDIUM**
VERFAHREN UND VORRICHTUNG ZUR HERSTELLUNG EINER KOMMUNIKATIONSVERBINDUNG SOWIE VORRICHTUNG UND COMPUTERLESBARES SPEICHERMEDIUM
PROCÉDÉ ET APPAREIL D'ÉTABLISSEMENT D'UNE CONNEXION DE COMMUNICATION, DISPOSITIF, ET SUPPORT D'ENREGISTREMENT LISIBLE PAR ORDINATEUR

(30) Priority: 21.07.2020 CN 202010706529
(43) Date of publication of application: 31.05.2023
(73) Proprietor: Hangzhou Hikvision Digital Technology Co., Ltd., Hangzhou, Zhejiang 310051 (CN)
(72) Inventor: LI, Zhixiao, Hangzhou, Zhejiang 310051 (CN)
(74) Representative: Goddar, Heinz J.
(86) International application number: PCT/CN2021/107451
(87) International publication number: WO 2022/017398

(56) References cited:
- WO-A1-2011/054227
- CN-A- 103 002 039
- CN-A- 103 095 683
- CN-A- 103 986 762
- CN-A- 107 454 141
- CN-A- 109 302 460
- CN-A- 109 600 267
- CN-A- 111 182 479
- CN-A- 111 698 337
- US-A1- 2009 006 648
- US-A1- 2017 118 249
- US-A1- 2018 152 519

## Description

### TECHNICAL FIELD

Embodiments of the present disclosure relate to the field of communication technology, in particular to a method, an apparatus, and a device for establishing a communication connection and a computer-readable storage medium.

### BACKGROUND

At present, a server and a client can establish a communication connection based on ports. For example, the server binds with a port, so that the client can establish a communication connection with the server based on the port.

In related art, the server cannot bind with a port when the port is occupied by another server. Therefore, the server needs to re-determine a port among ports not occupied by another server to bind.

However, in this case, the client needs to traverse a plurality of ports to try to re-establish a communication connection with the server until it succeeds. As a result, it may take a long time for the client to re-establish the communication connection with the server, thus reducing the communication efficiency.

US2017/118249A1 relates generally to techniques for controlling access to resources accessible in a distributed environment. One of the techniques includes connecting a security agent to a policy server through a default port using a default protocol. The security agent is configured to intercept requests for access to a resource in a distributed environment, and work with the policy server to control access to the resource based on policies stored on the policy server. The technique further includes obtaining a configuration file from the policy server such that the security agent can initialize and determine the distributed environment in which the security agent resides, analyzing ports of communication within the distributed environment to identify a preferred port that is available for connection to the policy server, and connecting to the policy server through the preferred port to access the policies for controlling the access to the resource.

WO2011/054227A1 relates to a method, system, managing device and communication device for managing communication device port is provided in the embodiment of the present invention. The method includes: obtaining the port configuration information of the communication device; judging whether the port configuration information of the communication device matches the operating system in which the communication device currently locates; if not, sending to the communication device a request of switching the port configuration according to a port management policy, so as for the communication device to re-configure the port according to the request of switching the port configuration. The present invention is applicable for managing the port configuration of communication devices.

US2018/152519A1 relates to systems, methods, and computer program products to perform an operation comprising obtaining a set of ports based on monitoring repeated attempts by a client application to establish a connection on ports signaled by a server application, establishing one or more secure connections between a client computer executing the client application to the server computer executing the server application based on the set of ports, opening each port of the set of ports to receive requests from the client application, listening on each of the set of ports for a first request from the client application to the server application, receiving, from the client application, the first request on a first port of the set of ports, and transmitting the first request to the server application.

### SUMMARY

The embodiments of the present disclosure provide a method, an apparatus, and a device for establishing a communication connection and a computer-readable storage medium, which can solve the problem that it may take a long time to establish a communication connection in the related art. The technical solution is as follows.

In a first aspect, there is provided a method for establishing a communication connection, which is applied to a client. The method includes:
establishing a communication connection with a server based on a first port, where the first port is a port negotiated by the client and the server, or the first port is a port used when the client communicated with the server last time;
in a case that establishing the communication connection with the server based on the first port fails, reading port information in target configuration data, where the target configuration data is client configuration data or server configuration data; where in a case where the target configuration data is the client configuration data, the target configuration data is data updated based on the server configuration data; in a case where the target configuration data is the server configuration data, the client obtains the server configuration data from other device; and
a second port indicated by port information in the server configuration data is capable of being used for establishing a communication connection between the client and the server, establishing a communication connection with the server based on the second port.

In another aspect, there is provided a method for establishing a communication connection, which is applied to a port management side. The method includes:
reading port information in client configuration data and reading port information in server configuration data, where a port indicated by the port information in the client configuration data is a port negotiated by a client and a server, or a port used when the client communicated with the server last time, and the port information in the server configuration data is information of a port currently bound by the server; and
when the port information in the client configuration data is different from the port information in the server configuration data, updating the client configuration data with the port information in the server configuration data, where a port indicated by port information in updated client configuration data is capable of being used for establishing a communication connection between the client and the server.

In yet another aspect, there is provided a method for establishing a communication connection, which is applied to a server. The method includes:
in a case that a binding between a server and a first port fails, determining a second port that is capable of being used for the binding; and
updating server configuration data with port information of the second port, so that a client reads port information in target configuration data in a case that establishing a communication connection with the server based on the first port fails; where the target configuration data is client configuration data or the server configuration data; where in a case where the target configuration data is the client configuration data, the target configuration data is data updated based on the server configuration data; in a case where the target configuration data is the server configuration data, the client obtains the server configuration data from other device.

In yet another aspect, there is provided an electronic device, which includes:
a processor; and
a memory storing instructions executable by the processor;
where the processor is configured to implement the methods for establishing a communication connection described in the above aspects.

In yet another aspect, there is provided a computer-readable storage medium storing instructions. When the instructions are executed by a processor, the methods for establishing a communication connection described in the above aspects are realized.

In yet another aspect, there is provided a computer program product including instructions, when run on a computer, the instructions causes the computer to perform the methods for establishing a communication connection described in the above aspects.

In yet another aspect, there is provided a computer program, when the computer program is executed by a processor, the methods for establishing a communication connection described in the above aspects are realized.

The technical solution provided by the embodiments of the present disclosure can at least bring the following beneficial effects:
the client can establish a communication connection with the server based on the first port. The first port may be a port negotiated by the client and the server, or may be a port used when the client communicated with the server last time. If the client fails to establish a communication connection with the server based on the first port, it indicates that the port currently bound by the server is not the first port. In this case, the client can read the port information in the target configuration data to determine the second port according to the port information in the target configuration data. In this way, the client establishes a communication connection with the server based on the second port. Since the client does not need to traverse a plurality of ports, but can directly determine the second port that can be used for establishing a communication connection with the server by reading the target configuration data, the time required for the client to establish a communication connection with the server can be shortened, and the communication efficiency can be improved.

### BRIEF DESCRIPTION OF THE DRAWINGS

In order to more clearly describe the technical solution in the embodiments of the present disclosure, accompanying drawings needed to be used in the description of the embodiments will be briefly introduced below. Obviously, the drawings in the following description are only some embodiments of the present disclosure. For those of ordinary skill in the art, other drawings can be obtained from these drawings without paying creative labor.
FIG. 1 is a schematic diagram illustrating an implementation environment according to an embodiment of the present disclosure;
FIG. 2 is a flowchart illustrating a method for establishing a communication connection according to an embodiment of the present disclosure;
FIG. 3 is a schematic diagram illustrating a method for establishing a communication connection according to an embodiment of the present disclosure;
FIG. 4 is a schematic diagram illustrating another method for establishing a communication connection according to an embodiment of the present disclosure;
FIG. 5 is a schematic diagram illustrating yet another method for establishing a communication connection according to an embodiment of the present disclosure;
FIG. 6 is a flowchart illustrating a method for establishing a communication connection according to an embodiment of the present disclosure;
FIG. 7 is a flowchart illustrating another method for establishing a communication connection according to an embodiment of the present disclosure;
FIG. 8 is a schematic diagram illustrating a method for establishing a communication connection according to an embodiment of the present disclosure;
FIG. 9 is a schematic diagram illustrating another method for establishing a communication connection according to an embodiment of the present disclosure;
FIG. 10 is a schematic diagram illustrating yet another method for establishing a communication connection according to an embodiment of the present disclosure;
FIG. 11 is a schematic diagram illustrating yet another method for establishing a communication connection according to an embodiment of the present disclosure;
FIG. 12 is a schematic structural diagram illustrating a device for establishing a communication connection according to an embodiment of the present disclosure;
FIG. 13 is a schematic structural diagram illustrating another device for establishing a communication connection according to an embodiment of the present disclosure;
FIG. 14 is a schematic structural diagram illustrating yet another device for establishing a communication connection according to an embodiment of the present disclosure;
FIG. 15 is a schematic structural diagram illustrating an electronic device according to an embodiment of the present disclosure.

### DETAILED DESCRIPTION OF THE EMBODIMENTS

In order to make the purpose, technical solution and advantages of the present disclosure clearer, the embodiments of the present disclosure will be further described in detail in combination with the drawings.

Before describing methods for establishing a communication connection according to the embodiments of the present disclosure in detail, the related terms and implementation environment involved in the embodiments of the present disclosure are introduced.

Firstly, a brief introduction is given to the related terms involved in the embodiments of the present disclosure.

Port conflict: when a server wants to bind a port, if the port is bound by another server, the server cannot bind with the port. In this case, it can be determined that the server has a port conflict.

Port synchronization: refers to the process that when a port bound by a server changes, a client determines a port newly bound by the server after the port change, and establishes a communication connection with the server based on the port newly bound by the server.

Port adaptation: refers to the process that when the server determines that a port is occupied by another server, the server re-selects a port among ports that are not bound by another server and then binds with the re-selected port.

Next, the implementation environment involved in the embodiments of the present disclosure will be briefly introduced.

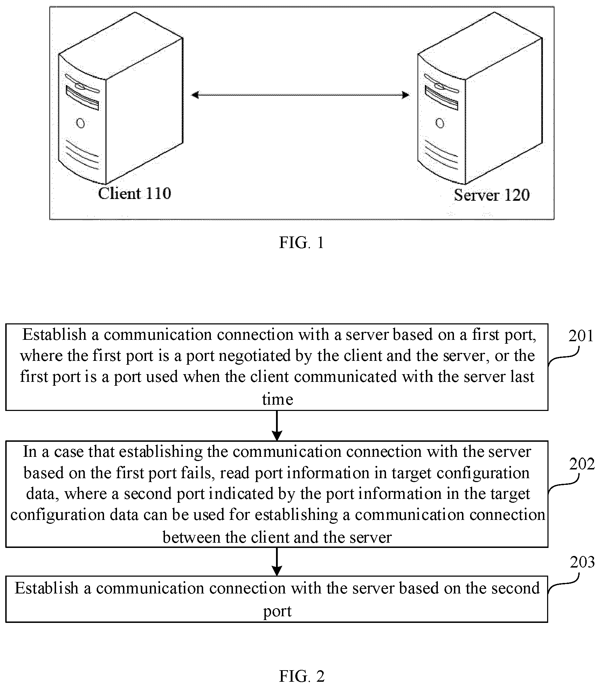

FIG. 1 is a schematic diagram of an implementation environment involved in an embodiment of the present disclosure. As shown in FIG. 1, the implementation environment includes a client 110 and a server 120. The client 110 and the server 120 can be located in a same electronic device (for example, the client and the server can be a client application and a server application located in the same electronic device, respectively), or they can be located in different electronic devices, which is not limited in this embodiment. In an example, the electronic device can be a Personal Computer (PC), a mobile phone, a smart phone, a Personal Digital Assistant (PDA), a wearable device, a Pocket PC (PPC), a tablet computer, a smart vehicle-mounted machine, a smart TV, a smart speaker, etc., which is not limited in the embodiments of the present disclosure.

For example, the number of clients 110 can be one or multiple, and the number of servers 120 can be one or multiple, which is not limited in this embodiment.

For example, the server 120 binds with a port, so that the client 110 can establish a communication connection with the server 120 based on the port. When the client 110 establishes a communication connection with the server 120, the client 110 can communicate with the server 120 based on the port.

Optionally, neither the client 110 nor the server 120 may have the capability of port management. In this case, the implementation environment involved in the method for establishing a communication connection according to the embodiment of the present disclosure can also include a port management side. The port management side can select a port that can be bound for the server 120, and the port management side can determine a port that can be used for establishing a communication connection with the server 120 for the client 110. In some embodiments, the port management side can be a "watchdog" program.

It should be noted that when the client 110 and the server 120 are located in an electronic device, the port management side can be located in the electronic device or not, which is not limited in this embodiment.

After introducing the implementation environment involved in the embodiments of the present disclosure, the methods for establishing a communication connection according to the embodiments of the present disclosure will be described in detail in combination with the drawings.

FIG. 2 is a flowchart of a method for establishing a communication connection according to an embodiment of the present disclosure, which can be applied to the above implementation environment. Referring to FIG. 2, the method includes the following steps.

Step 201: a communication connection with a server is established based on a first port, where the first port is a port negotiated by the client and the server, or the first port is a port used when the client communicated with the server last time.

As an example, the negotiated port can be a default port, or the negotiated port can be a port set by a user, or the negotiated port can be a port jointly determined by the client and the server.

For example, if the client establishes a communication connection with the server for the first time, the client can try to establish a communication connection with the server based on the port negotiated by the client and the server. If it is not the first time that the client establishes a communication connection with the server, the client can try to establish a communication connection with the server based on the port used for the last communication with the server.

As an example, the implementation of the client establishing a communication connection with the server based on the first port can include: sending a connection request message to the server through the first port. If a connection response message from the server is not received, the client counts a number of connection failures. The number of connection failures refers to a number of times that the client sends the connection request message through the first port and does not receive the connection response message. If the number of connection failures is less than or equal to a threshold of the number of connection failures, the client returns to the operation of sending the connection request message to the server through the first port until the number of connection failures is greater than the threshold of the number of connection failures. If the number of connection failures is greater than the threshold of the number of connection failures, the client determines that establishing the communication connection with the server based on the first port fails.

The connection request message is a message sent by the client to the server. The connection request message can be used to request the server to establish a communication connection with the client. The connection response message is a message sent by the server to the client. The connection response message can be used to indicate that the server agrees to establish a connection with the client.

The threshold of the number of connection failures can be set according to the actual situation, which is not limited in this embodiment. For example, the threshold of the number of connection failures can be set to 2. Optionally, a reference value for determining that the connection fails can also be set. The threshold of the number of connection failures is a maximum integer less than the reference value for determining that the connection fails. When the number of connection failures is equal to the reference value for determining that the connection fails, i.e., the number of connection failures is greater than the threshold of the number of connection failures for the first time, it is determined that establishing a communication connection with the server based on the first port fails.

For example, if the client sends a connection request message to the server through the first port and does not receive a connection response message from the server, it may be due to that the server does not bind with the first port, or that the server binds with the first port but the current network quality is poor. To further determine whether the server binds with the first port, the client can count the number of connection failures, that is, the client can count the number of times that the connection request message is sent to the server through the first port and the connection response message is not received from the server. If the number of connection failures is less than or equal to the threshold of the number of connection failures, the client can re-send the connection request message to the server through the first port. If the number of connection failures is greater than the threshold of the number of connection failures, the client can determine that the server does not bind with the first port, that is, the first port cannot be used for establishing a communication connection between the client and the server.

For example, the threshold of the number of connection failures can be set to 2. If the client sends a connection request message to the server through the first port and does not receive a connection response message from the server for 3 times, since the number of connection failures is greater than the threshold of the number of connection failures, the client can determine that the server does not bind with the first port, that is, the first port cannot be used for establishing a communication connection between the client and the server.

For example, if the client sends a connection request message to the server through the first port and receives a connection response message from the server, it indicates that the server binds with the first port and the server agrees to establish a communication connection with the client, that is, the first port can be used for establishing a communication connection between the client and the server.

Step 202: in a case that establishing the communication connection with the server based on the first port fails, port information in target configuration data is read, where a second port indicated by the port information in the target configuration data can be used for establishing a communication connection between the client and the server.

The target configuration data can be a file, or a data table in a database.

The port information in the target configuration data can include at least one of a port type of the second port, a port number of the second port, and so on, which is not limited in this embodiment.

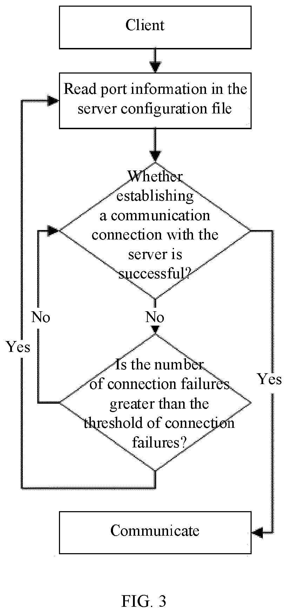

If the client fails to establish a communication connection with the server based on the first port, it indicates that the port currently bound by the server is not the first port, that is, the first port cannot be used for establishing a communication connection between the client and the server. In this case, as shown in FIG. 3, the client can read the port information in the target configuration data (the target configuration data can be a server configuration file), and determine the second port that can be used for establishing a communication connection between the client and the server based on the port information in the target configuration data.

As an example, the second port is determined by the server when the binding between the server and the first port fails.

That is, the second port can be determined by the server. Specifically, if the first port is occupied by another server, the binding between the server and the first port fails. In the case where the binding between the server and the first port fails, the server can determine the second port that can be used for binding, and update the target configuration data with the port information of the second port. In addition, the server binds with the second port. After updating the target configuration data with the port information of the second port, the server can monitor the second port.

Optionally, in this case, the target configuration data can be the server configuration data. For example, the server configuration data is a server configuration file.

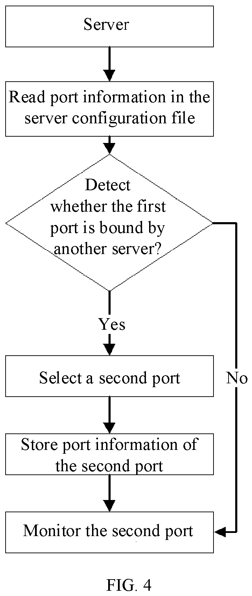

For example, the process of the server updating the server configuration data with the port information of the second port is shown in FIG. 4. When the server starts, the server can read the port information in the server configuration data (such as the server configuration file), determine a first port based on the port information in the server configuration data, and try to bind the first port. If the first port is bound by another server, the server cannot bind with the first port, that is, the server has a port conflict. In this case, the server can select a second port from ports not bound by another server. In this way, the server can bind with the second port and store the port information of the second port in the server configuration data.

As another example, the second port is determined by a port management side when the binding between the server and the first port fails.

The port management side refers to a management side that can resolve the port conflict of the server and assist the client in port synchronization. For example, the port management side can solve the port conflict of the server by managing the server configuration data, and can also assist the client in port synchronization by managing client configuration data.

That is, the second port can be determined by the port management side. Specifically, if the first port is occupied by another server, the port management side can determine a second port that can be used for binding and update the server configuration data with the port information of the second port. After updating the server configuration data with the port information of the second port, the server can restart to monitor the second port.

For example, in port conflict management, the port management side can detect a binding condition of the first port. If the port management side detects that the first port is bound by another server, the port management side can determine that the server has a port conflict. In this case, the port management side can select a second port from ports that are not bound by another server, and update the server configuration data with port information of the second port. The second port can be used for establishing a communication connection between the client and the server.

Optionally, the above target configuration data is client configuration data. For example, the target configuration data can be a client configuration file, and the client configuration data is managed by the port management side based on the server configuration data.

For example, the port management side can manage the client configuration data, check whether the port information in the client configuration data is consistent with the port information in the server configuration data, and if not, the port management side will update the client configuration data with the port information in the server configuration data, thus assisting the client in port synchronization. That is, the port management side can determine the port that can be used for establishing a communication connection between the client and the server for the client.

In a possible implementation, the client and the server can be located in different electronic devices. In the case that no communication connection is established between the client and the server, the server can establish a communication connection with an electronic device and send the target configuration data to the electronic device. The client can establish a communication connection with the electronic device, so that the client can read port information in the target configuration data from the electronic device.

Step 203: a communication connection with the server is established based on the second port.

That is, the client can send a connection request message to the server based on the second port. If the client receives a connection response message from the server, it indicates that the server binds with the second port, and the server agrees to establish a communication connection with the client. In this way, the client can communicate with the server based on the second port.

If the client does not receive the connection response message from the server, it may be due to that the server does not bind with the second port, or that the server binds with the second port but the current network quality is poor. To further determine whether the server binds with the second port, the client can count a number of connection failures. If the number of connection failures is less than or equal to a threshold of the number of connection failures, the client can re-send the connection request message to the server through the second port. If the number of connection failures is greater than the threshold of the number of connection failures, the client can determine that the server does not bind with the second port, that is, the second port cannot be used for establishing a communication connection between the client and the server. In this case, the client can re-read the port information in the target configuration data, and establish a communication connection with the server based on a port indicated by the re-read port information.

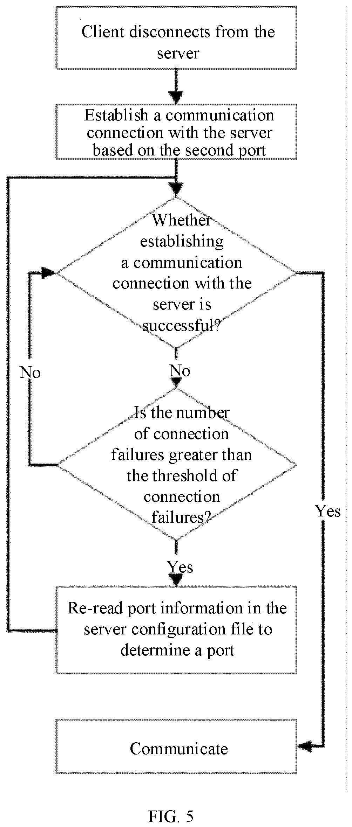

As an example, as shown in FIG. 5, after the client establishes a communication connection with the server based on the second port, if the communication connection between the client and the server is disconnected, the client can try to send a connection request message to the server based on the second port again. If the client receives a connection response message from the server, it indicates that the port bound by the server has not changed, and the server agrees to establish a communication connection with the client, so that the client can communicate with the server based on the second port.

If the client does not receive the connection response message from the server, it may be due to that the port bound by the server has changed, or that the port bound by the server has not changed but the current network quality is poor. To further determine whether the port bound by the server has changed, the client can count a number of connection failures. If the number of connection failures is less than or equal to a threshold of the number of connection failures, the client can re-send the connection request message to the server through the second port. If the number of connection failures is greater than the threshold of the number of connection failures, it is determined that the port bound by the server has changed, so that the client cannot establish a communication connection with the server based on the second port. In this case, the client can re-read the port information in the target configuration data (such as the server configuration file), and establish a communication connection with the server based on a port indicated by the re-read port information.

In the embodiment of the present disclosure, the client can establish a communication connection with the server based on the first port. The first port may be a port negotiated by the client and the server for establishing a communication connection with the server, or may be a port used when the client communicated with the server last time for establishing a communication connection with the server. If the client fails to establish a communication connection with the server based on the first port, it indicates that the port currently bound by the server is not the first port. In this case, the client can read the port information in the target configuration data to determine the second port according to the port information in the target configuration data. In this way, the client establishes a communication connection with the server based on the second port. Since the client does not need to traverse a plurality of ports, but can directly determine the second port that can be used for establishing a communication connection with the server by reading the target configuration data, the time required for the client to establish a communication connection with the server can be shortened, and the communication efficiency can be improved.

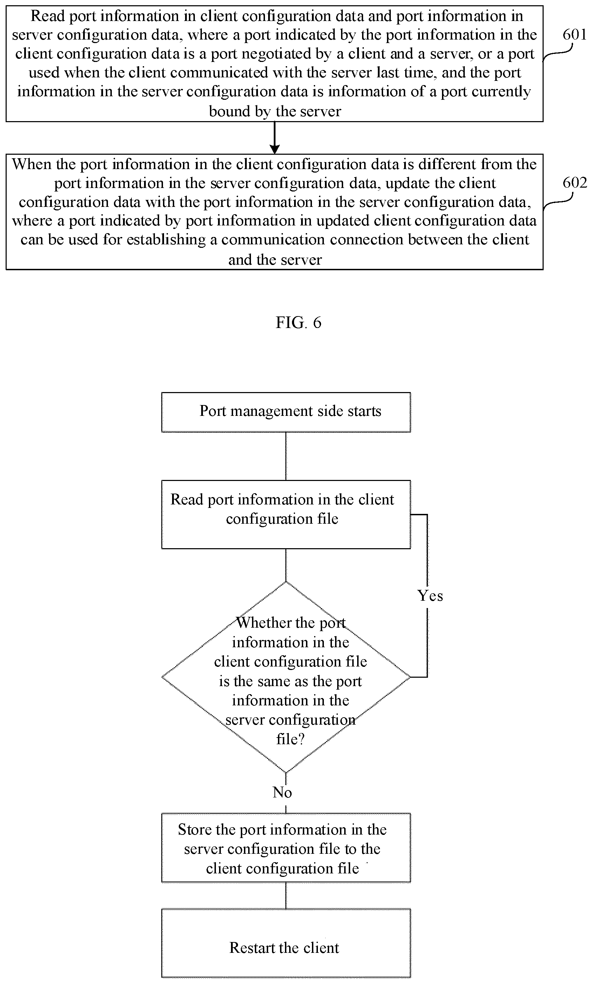

FIG. 6 is a flowchart illustrating a method for establishing a communication connection according to an embodiment of the present disclosure. The method can be applied to the above implementation environment. Here, the implementation environment includes a port management side as an example, and the method is mainly implemented by the port management side. Referring to FIG. 6, the method includes the following steps.

Step 601: port information in client configuration data is read and port information in server configuration data is read, where a port indicated by the port information in the client configuration data is a port negotiated by a client and a server, or a port used when the client communicated with the server last time, and the port information in the server configuration data is information of a port currently bound by the server.

The port indicated by the port information in the client configuration data is a server port, not a client port. The port may be a port currently bound by the server, or may be a port previously bound by the server, or may be a default port of the server. Specifically, the port information can include a port number of the port indicated by the port information, a port type of the port indicated by the port information, and so on, which is not limited in this embodiment. The client configuration data can be a client configuration file or a data table in a database.

A port indicated by the port information in the server configuration data is a server port, and the port information in the server configuration data can be information of a port currently bound by the server. The port information in the server configuration data can include a port number of the port indicated by the port information in the server configuration data, and can also include a port type of the port indicated by the port information in the server configuration data, etc., which is not limit in this embodiment. In addition, it is not difficult to understand that the port information in the server configuration data may be the same or different from the port information in the client configuration data. The server configuration data can be a server configuration file or a data table in a database.

Here, the port management side can solve the port conflict of the server by managing the server configuration data, and can also assist the client in port synchronization by managing the client configuration data.

For example, the port management side can respectively read the port information in the client configuration data and the port information in the server configuration data, and analyze the port information in the client configuration data, so as to determine whether the client configuration data needs to be updated based on the port information in the server configuration data, thereby assisting the client in port synchronization. That is, the port management side can determine the port that can be used for establishing a communication connection between the client and the server for the client. In this way, the client can directly read port information in managed client configuration data, and establish a communication connection with the server based on a port indicated by the port information in the managed client configuration data.

As an example, the port management side can be equipped with management configuration data. In this case, the implementation of step 601 can include: based on the management configuration data of the port management side, the port management side reads the port information in the client configuration data and reads the port information in the server configuration data. The management configuration data includes configuration data management information. The configuration data management information is used for determining port information of at least one pair of a client and a server to be synchronized.

In an example, the configuration data management information can include at least one or more of a port type, a storage path of configuration data, a storage location of port information in the configuration data, etc., which is not limited in this embodiment.

In an example, when the port management side needs to manage the client configuration data, the port management side can read the configuration data management information of which the port type is a client type based on the management configuration data, and determine the storage path of the configuration data and the storage location of the port information in the configuration data. Further, the port management side reads the client configuration data based on the storage path of the configuration data, and reads the port information in the client configuration data based on the storage location of the port information in the configuration data.

It should be noted that the configuration data management information in the management configuration data can be divided into a plurality of groups. Each group of configuration data management information can include one piece of server configuration data management information and a plurality of pieces of client configuration data management information. One or more clients corresponding to the plurality of pieces of client configuration data management information are clients that need to establish a communication connection with a server corresponding to the server configuration data management information.

Step 602: when the port information in the client configuration data is different from the port information in the server configuration data, the client configuration data is updated with the port information in the server configuration data, where a port indicated by port information in updated client configuration data can be used for establishing a communication connection between the client and the server.

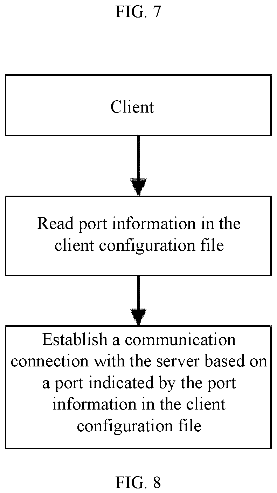

For example, as shown in FIG. 7, when the port information in the client configuration data (such as the client configuration file) is different from the port information in the server configuration data (such as the server configuration file), that is, when the port indicated by the port information in the client configuration data is different from the port indicated by the port information in the server configuration data, the port management side can determine that the server does not bind with the port indicated by the port information in the client configuration data, that is, the port indicated by the port information in the client configuration data cannot be used for establishing a communication connection between the client and the server.

In this case, the port management side can manage the client configuration data, that is, the port management side can update the port information in the client configuration data, so that the port indicated by the port information in the client configuration data is the same as the port indicated by the port information in the server configuration data. For example, the port management side can directly update the client configuration data with the port information in the server configuration data. After the update, the client can be restarted. In this way, when the port indicated by the port information in the client configuration data is the same as the port indicated by the port information in the server configuration data, as shown in FIG. 8, the client can directly read the port information in the client configuration data (such as the client configuration file), and establish a communication connection with the server based on the port indicated by the port information in the client configuration data.

It should be noted that the update described herein can refer to overwriting the original port information with the re-determined port information, that is, the updated client configuration data does not include port information of the last binding. Or, the update can mean that the re-determined port information is stored in the client configuration data and recorded as the latest port information. For example, the port management side can record the re-determined port information as the latest port information by updating time, so that the client can read the latest port information according to the time when reading port information. That is, in this case, the client configuration file also includes the port information of the last binding, but the port information of the last binding is no longer the latest port information.

As an example, after the port management side updates the client configuration data with the port information in the server configuration data, the port management side can also restart the client. In this way, after being restarted, the client can immediately read the port information in the client configuration data, and establish a communication connection with the server based on the port indicated by the port information in the client configuration data.

As an example, the port management side can also perform the following operations: detecting a binding condition of a port indicated by the port information in the server configuration data, and if the port indicated by the port information in the server configuration data is bound by another server, re-determining a port among ports that are not bound by another server, and updating the server configuration data with port information of the re-determined port.

In an example, the port management side can manage the server configuration data to resolve the port conflict of the server, that is, the port management side can select a port that the server can binds with for the server. In this way, the server can directly read port information in managed server configuration data and bind with the port indicated by the port information in the managed server configuration data.

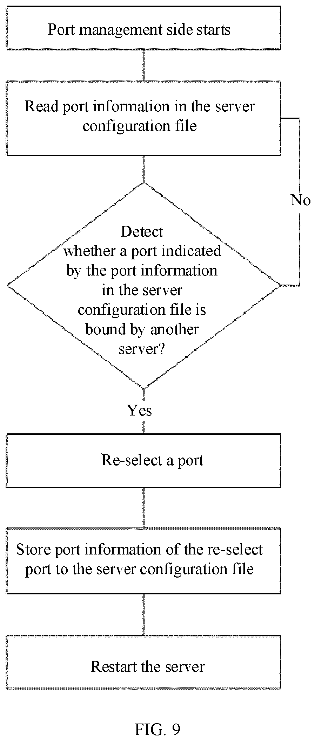

For example, as shown in FIG. 9, the port management side can read the port information in the server configuration data (such as the server configuration file), and detect a binding condition of a port indicated by the port information in the server configuration data, so as to determine whether the server configuration data needs to be updated according to the binding condition of the port indicated by the port information in the server configuration data.

If the port management side detects that the port indicated by the port information in the server configuration data is bound by the server, the port management side can determine that the server has no port conflict. Therefore, the port management side does not need to re-select a port for the server, that is, the server configuration data does not need to be updated.

If the port management side detects that the port indicated by the port information in the server configuration data is bound by another server, the port management side can determine that the server cannot bind with the port indicated by the port information in the server configuration data, that is, the server has a port conflict. Therefore, the port management side can re-select a port for the server, that is, the port management side can update the server configuration data.

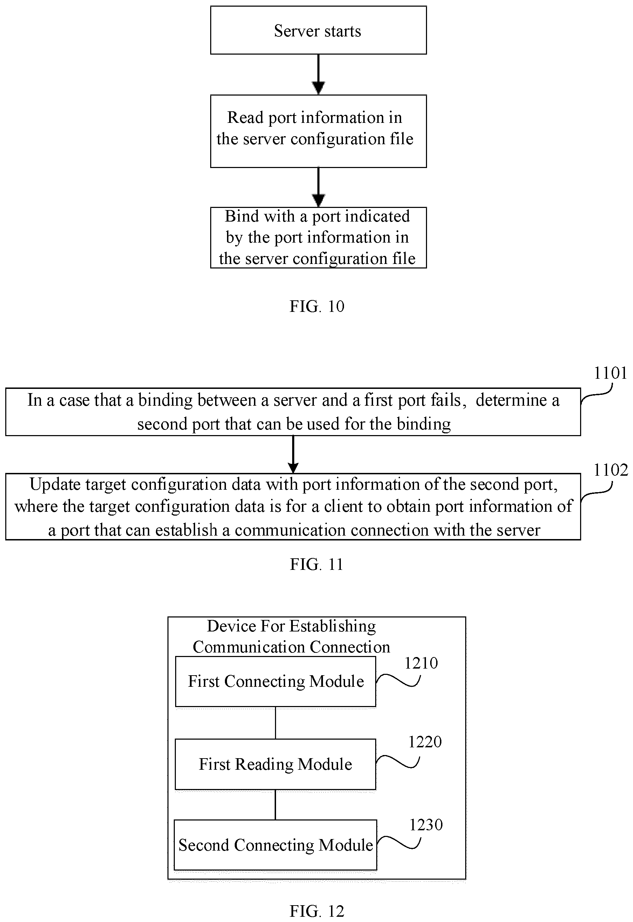

In an example, the port management side can re-select a port from the ports not bound by another server, and update the server configuration data with port information of the re-selected port. In this way, as shown in FIG. 10, the server can directly determine the re-selected port by reading the port information in the server configuration data (such as the server configuration file), and bind with the re-selected port.

As an example, after the port management side updates the server configuration data with the port information of the re-selected port, the port management side can also restart the server. In this way, after being restarted, the server can immediately read the port information in the server configuration data, so that the server can bind with the port indicated by the port information in the server configuration data.

In a possible implementation, the port management side can update the port information in the server configuration data after re-determining all ports from unbound ports, and then restart the server to start monitoring.

In another possible implementation, the port management side determines all ports bound by another server in ports indicated by the port information in the server configuration data, and updates port information in the server configuration data based on all the determined ports bound by another server and unbound ports. It should be noted that the port information in the server configuration data may indicate more than one port, and each port indicated corresponds to a server that can be connected with the client. The port management side can re-determine a port from the unbound ports for each server having a port conflict which can be connected with the client, and update the server configuration data with port information of the port re-determined for each server having a port conflict. That is, after re-determining, for all ports bound by another server, corresponding ports among the ports that are not bound by another server, the port management side updates the server configuration data with the port information of the re-determined ports. It can be seen that in this implementation, the port management side can update the port information in the server configuration data in batches under the condition that corresponding ports are re-determined for all ports bound by another server, so as to reduce port conflicts and improve the processing efficiency of the port management side.

In another possible implementation, the port management side can also update port information in the server configuration data based on port information of a re-determined port each time the port is re-determined from unbound ports, and restart the server to enable the monitoring of the port. After that, the port management side continues to determine a next port from the unbound ports and cycles in the above manner.

In another possible implementation, each time a port bound by another server is determined in ports indicated by the port information in the server configuration data, the port management side updates the port information in the server configuration data based on the determined port bound by another server and one or more ports not bound by another server. For example, the port management side replaces port information of the determined port bound by another server with port information of an unbound port to update the server configuration data. After updating the server configuration data, the port management side restarts the server to enable port monitoring. After that, the port management side continues to determine a next port bound by another server and a next unbound port, and cycles in the above manner. That is, each time a port bound by another server is determined and a corresponding port is re-determined among ports that are not bound by another server, the port management side updates the server configuration data with port information of the re-determined port.

For example, when the port management side needs to manage the server configuration data, the port management side can read the configuration data management information of which port type is a server type based on the management configuration data, and determine the storage path of the configuration data and the storage location of the port information in the configuration data. Further, the port management side reads the server configuration data based on the storage path of the configuration data, and reads the port information in the server configuration data based on the storage location of the port information in the configuration data. Further, the port management side can detect the binding condition of one or more ports indicated by the port information in the server configuration data, and determine whether the server configuration data needs to be updated based on the binding condition of the one or more ports indicated by the port information in the server configuration data.

It should be noted that the port management side can manage multiple pieces of server configuration data, and the port management side can regularly manage the multiple pieces of server configuration data. For example, the port management side can manage the multiple pieces of server configuration data every one minute, or manage the multiple pieces of server configuration data in real time, which is not limited in this embodiment.

Optionally, after the port management side updates the server configuration data with the port information of the re-determined one or more ports, the port management side can detect whether the port information in the client configuration data is the same as the port information in the server configuration data based on the port information in the updated server configuration data. Further, when the port information in the client configuration data is different from the port information in the server configuration data, the port management side updates the client configuration data with the port information in the updated server configuration data, so that the port indicated by the port information in the updated client configuration data can be used for establishing a communication connection between the client and the server. That is, the port management side performs a port conflict detection for the server, and after detecting the port conflict of the server and updating the server configuration data, performs port synchronization of the server and the client. Optionally, after updating the server configuration data every time, the port management side detects again whether the port information in the client configuration data is the same as the port information in the server configuration data for port synchronization.

In the embodiment of the present disclosure, the port management side can read the port information in the client configuration data. If the port information in the client configuration data is different from the port information in the server configuration data, it means that the port currently bound by the server is not the port indicated by the port information in the client configuration data. That is, the client cannot establish a communication connection with the server based on the port indicated by the port information in the client configuration data. In this case, the port management side can store the port information in the server configuration data to the client configuration data, that is, update the port indicated by the port information in the client configuration data to be the port indicated by the port information in the server configuration data. In this way, the client does not need to traverse a plurality of ports, but can directly determine a port that can be used for establishing a communication connection with the server by reading the client configuration data. Therefore, the time required for the client to establish a communication connection with the server can be shortened, and the communication efficiency can be improved. In addition, when the port management side manages the port information of at least one pair of a client and a server to be synchronized by managing the configuration data, the method according to the embodiment of the present disclosure can solve the port conflict problem of the server in batch and realize the communication connection between the client and the server.

Referring to FIG. 11, which is a flowchart illustrating a method for establishing a communication connection according to an exemplary embodiment. This method can be applied to the above implementation environment. Specifically, when the implementation environment does not include a port management side, the method can be performed by a server, and when the implementation environment includes a port management side, the method can be performed by the port management side. The method can specifically include the following implementation steps.

Step 1101: in a case that a binding between a server and a first port fails, a second port that can be used for the binding is determined.

In the case that the binding between the server and the first port fails, it indicates that the first port is occupied by another server. In this case, the port management side can re-determine a port from one or more unoccupied ports, that is, determine the second port that can be used for binding with the server.

Step 1102: target configuration data is updated with port information of the second port, where the target configuration data is for a client to obtain port information of a port that can establish a communication connection with the server.

In an example, the target configuration data can be server configuration data. Or, the target configuration data can also be client configuration data. The target configuration data can be a file, or a data table in a database. After updating the target configuration data with the port information of the second port, the server can restart to monitor the second port.

It should be noted that the implementation principle of the embodiments of the present disclosure is similar to that of the above embodiments, and reference can be made to the above embodiments for details.

In the embodiment of the present disclosure, if the binding between the server and the first port fails, it means that the first port can no longer be used for establishing a communication connection between the client and the server. In this case, a second port that can be used for binding with the server can be re-determined, and the target configuration data can be updated with the port information of the second port. In this way, the client does not need to traverse a plurality of ports, but can directly determine the port that can be used for establishing a communication connection with the server by reading the target configuration data. Therefore, the time required for the client to establish a communication connection with the server can be shortened, and the communication efficiency can be improved.

FIG. 12 is a schematic structural diagram illustrating a device for establishing a communication connection according to an exemplary embodiment. The device for establishing a communication connection can be implemented by software, hardware, or a combination of both. The device for establishing a communication connection may include:
a first connecting module 1210, configured to establish a communication connection with a server based on a first port, where the first port is a port negotiated by the client and the server, or the first port is a port used when the client communicated with the server last time;
a first reading module 1220, configured to, in a case that establishing the communication connection with the server based on the first port fails, read port information in target configuration data, where a second port indicated by the port information in the target configuration data is capable of being used for establishing a communication connection between the client and the server; and
a second connecting module 1230, configured to establish a communication connection with the server based on the second port.

In a possible implementation of the embodiment of the present disclosure, the first connecting module 1210 is configured to:
send a connection request message to the server through the first port;
in response to receiving no connection response message from the server, count a number of connection failures, where the number of connection failures refers to a number of times that the connection request message is sent through the first port and no connection response message is received;
in response to the number of connection failures being less than or equal to a threshold of the number of connection failures, return to the sending the connection request message to the server through the first port, and in response to the number of connection failures being greater than the threshold of the number of connection failures, determine that establishing the communication connection with the server based on the first port fails.

In a possible implementation of the embodiment of the present disclosure, the second port is determined by the server when a binding between the server and the first port fails, or the second port is determined by a port management side when a binding between the server and the first port fails.

In a possible implementation of the embodiment of the present disclosure, the target configuration data is server configuration data, or the target configuration data is client configuration data which is managed by a port management side based on the server configuration data.

In the embodiment of the present disclosure, the client can establish a communication connection with the server based on the first port. The first port may be a port negotiated by the client and the server for establishing a communication connection with the server, or may be a port used when the client communicated with the server last time for establishing a communication connection with the server. If the client fails to establish a communication connection with the server based on the first port, it indicates that the port currently bound by the server is not the first port. In this case, the client can read the port information in the target configuration data to determine the second port according to the port information in the target configuration data. In this way, the client establishes a communication connection with the server based on the second port. Since the client does not need to traverse a plurality of ports, but can directly determine the second port that can be used for establishing a communication connection with the server by reading the target configuration data, the time required for the client to establish a communication connection with the server can be shortened, and the communication efficiency can be improved.

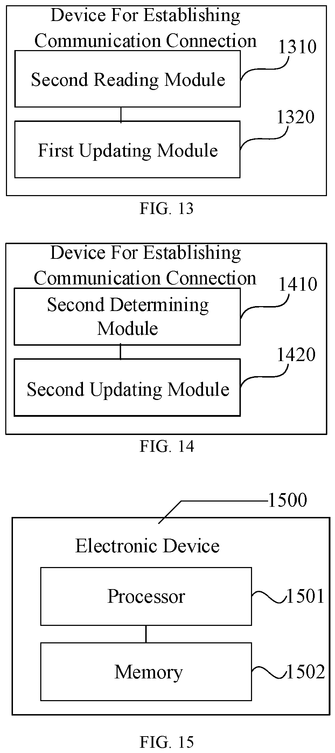

FIG. 13 is a schematic structural diagram illustrating a device for establishing a communication connection according to an exemplary embodiment. The device for establishing a communication connection can be implemented by software, hardware, or a combination of both. The device for establishing a communication connection may include:
a second reading module 1310, configured to read port information in client configuration data and read port information in server configuration data, where a port indicated by the port information in the client configuration data is a port negotiated by a client and a server, or a port used when the client communicated with the server last time, and the port information in the server configuration data is information of a port currently bound by the server; and
a first updating module 1320, configured to, when the port information in the client configuration data is different from the port information in the server configuration data, update the client configuration data with the port information in the server configuration data, where a port indicated by port information in updated client configuration data is capable of being used for establishing a communication connection between the client and the server.

In a possible implementation of the embodiment of the present disclosure, the device further includes:
a detecting module, configured to detect a binding condition of a port indicated by the port information in the server configuration data;
a first determining module, configured to, in response to that the port indicated by the port information in the server configuration data is bound by another server, re-determine a port among ports that are not bound by another server;
where the first updating module is configured to update the server configuration data with port information of the re-determined port.

In a possible implementation of the embodiment of the present disclosure, after re-determining, for all ports bound by another server, ports among the ports that are not bound by another server, the first updating module is triggered to update the server configuration data with the port information of the re-determined ports; or,
each time a port bound by another server is determined and a port is re-determined among the ports that are not bound by another server, the first updating module is triggered to update the server configuration data with the port information of the re-determined port.

In a possible implementation mode of the embodiment of the present disclosure, the second reading module 1310 is configured to: based on management configuration data of the port management side, read the port information in the client configuration data and read the port information in the server configuration data, where the management configuration data includes configuration data management information which is for determining port information of at least one pair of a client and a server to be synchronized.

In a possible implementation mode of the embodiment of the present disclosure, the configuration data management information includes one or more of a port type, a storage path of configuration data, and a storage location of port information in the configuration data;
the management configuration data includes a plurality of groups of configuration data management information, and each group of configuration data management information includes one piece of server configuration data management information and a plurality of pieces of client configuration data management information, where one or more clients corresponding to the plurality of pieces of client configuration data management information are clients that need to establish a communication connection with a server corresponding to the server configuration data management information.

In the embodiment of the present disclosure, the port management side can read the port information in the client configuration data. If the port information in the client configuration data is different from the port information in the server configuration data, it means that the port currently bound by the server is not the port indicated by the port information in the client configuration data, That is, the client cannot establish a communication connection with the server based on the port indicated by the port information in the client configuration data. In this case, the port management side can store the port information in the server configuration data to the client configuration data, that is, update the port indicated by the port information in the client configuration data to be the port indicated by the port information in the server configuration data. In this way, the client does not need to traverse a plurality of ports, but can directly determine a port that can be used for establishing a communication connection with the server by reading the client configuration data. Therefore, the time required for the client to establish a communication connection with the server can be shortened, and the communication efficiency can be improved.

FIG. 14 is a schematic structural diagram illustrating a device for establishing a communication connection according to an exemplary embodiment. The device for establishing a communication connection can be implemented by software, hardware, or a combination of both. The device for establishing a communication connection may include:
a second determining module 1410, configured to, in a case that a binding between a server and a first port fails, determine a second port that is capable of being used for the binding; and
a second updating module 1420, configured to update target configuration data with port information of the second port, the target configuration data being for a client to obtain port information of a port that is capable of establishing a communication connection with the server.

In the embodiment of the present disclosure, if the binding between the server and the first port fails, it means that the first port can no longer be used for establishing a communication connection between the client and the server. In this case, a second port that can be used for binding with the server can be re-determined, and the target configuration data can be updated with the port information of the second port. In this way, the client does not need to traverse a plurality of ports, but can directly determine the port that can be used for establishing a communication connection with the server by reading the target configuration data. Therefore, the time required for the client to establish a communication connection with the server can be shortened, and the communication efficiency can be improved.

It should be noted that when the devices for establishing a communication connection according to the above embodiments establish a communication connection, only the division of the above functional modules are taken as example for description. In practical applications, the above functional allocation can be completed by different functional modules according to needs, that is, the internal structure of the device is divided into different functional modules to complete all or part of the functions described above. In addition, the devices for establishing a communication connection provided by the above embodiments belong to the same concept as the method embodiments for establishing a communication connection. The specific implementation process can refer to the method embodiments for detail, which will not be repeated herein.

FIG. 15 is a structural block diagram of an electronic device 1500 according to an embodiment of the present disclosure. The electronic device 1500 can be a portable mobile terminal, such as a smart phone, a tablet computer, an MP3 player (Moving Picture Experts Group Audio Layer III), an MP4 player (Moving Picture Experts Group Audio Layer IV), a notebook computer or a desktop computer. The electronic device 1500 may also be referred to as user equipment, portable terminal, laptop terminal, desktop terminal and other names.

Generally, the electronic device 1500 includes a processor 1501 and a memory 1502.

The processor 1501 may include one or more processing cores, such as a 4-core processor, an 8-core processor, etc. The processor 1501 can be implemented in at least one hardware form of DSP (Digital Signal Processing), FPGA (Field-Programmable Gate Array) and PLA (Programmable Logic Array). The processor 1501 can also include a main processor and a coprocessor. The main processor is a processor used for processing data in a wake-up state, also called a CPU (Central Processing Unit). The coprocessor is a low-power processor for processing data in a standby state. In some embodiments, the processor 1501 can be integrated with a GPU (Graphics Processing Unit) which is used to be responsible for rendering and drawing the content to be displayed on the display screen. In some embodiments, processor 1501 may also include an AI (Artificial Intelligence) processor for processing computing operations related to machine learning.

The memory 1502 may include one or more computer-readable storage media, which may be non-transient. The memory 1502 may also include high-speed random access memory, and non-volatile memory, such as one or more disk storage devices, flash memory storage devices. In some embodiments, the non-transient computer-readable storage medium in memory 1502 is used to store at least one instruction, which is executed by the processor 1501 to realize the methods of establishing a communication connection provided by the method embodiments in the embodiments of the present disclosure.

It can be understood by those skilled in the art that the structure shown in FIG. 15 does not constitute a limitation on the electronic device 1500, which can include more or fewer components than those shown, or combine some components, or adopt different component arrangements.

In some embodiments, a computer-readable storage medium is also provided, in which a computer program is stored. When the computer program is executed by a processor, the steps of realizing the methods of establishing a communication connection in the above embodiments are implemented. For example, the computer-readable storage medium can be a magnetic disk or optical disk, a EEPROM (Electrically Erasable Programmable Read Only Memory), a EPROM (Erasable Programmable Read Only Memory), a SRAM (Static Random Access Memory), ROM (Read Only Memory), a magnetic memory, a flash memory, a PROM (Programmable Read Only Memory), etc.

It is worth noting that the computer-readable storage medium mentioned in the embodiment of the present disclosure can be a non-volatile storage medium, in other words, a non-transitory storage medium.

It should be understood that all or part of the steps to implement the above embodiments may be implemented by software, hardware, firmware, or any combination thereof. When implemented by software, the steps can be fully or partially implemented in the form of a computer program product. The computer program product includes one or more computer instructions. The computer instructions can be stored in the computer-readable storage medium.

That is, in some embodiments, a computer program product containing instructions is also provided, which, when run on a computer, causes the computer to perform the steps of the above-mentioned method for establishing a communication connection.

In some embodiments, a computer program is also provided. When the computer program is executed by a processor, the method for establishing a communication connection described above is realized.

## Claims

1. A method for establishing a communication connection, **characterized by** the method being performed by a client and comprising:
establishing (201) a communication connection with a server based on a first port,
wherein the first port is a port negotiated by the client and the server, or the first port is a port used when the client communicated with the server last time;
in a case that establishing the communication connection with the server based on the first port fails,
reading (202) port information in target configuration data, wherein the target configuration data is client configuration data or server configuration data;
wherein in a case where the target configuration data is the client configuration data, the target configuration data is data updated based on the server configuration data;
in a case where the target configuration data is the server configuration data, the client obtains the server configuration data from another device; and
a second port indicated by the read port information in the target configuration data is capable of being used for establishing a communication connection between the client and the server, establishing (203) a communication connection with the server based on the second port.

2. The method according to claim 1, wherein establishing (201) the communication connection with the server based on the first port comprises:
sending a connection request message to the server through the first port;
in response to receiving no connection response message from the server,
counting a number of connection failures, wherein the number of connection failures refers to a number of times that the connection request message is sent through the first port and no connection response message is received;
in response to the number of connection failures being less than or equal to a threshold of the number of connection failures,
returning to the sending the connection request message to the server through the first port, and
in response to the number of connection failures being greater than the threshold of the number of connection failures,
determining that establishing the communication connection with the server based on the first port fails.

3. The method according to claim 1, wherein the second port is determined by the server when a binding between the server and the first port fails; or,
the second port is determined by a port management side when a binding between the server and the first port fails.

4. The method according to claim 1, wherein in the case where the target configuration data is the client configuration data, the the client configuration data is managed by a port management side based on the server configuration data.

5. A method for establishing a communication connection, **characterized by** being performed by a port management side and comprising:
reading (601) port information in client configuration data and reading port information in server configuration data, wherein a port indicated by the port information in the client configuration data is a port negotiated by a client and a server, or a port used when the client communicated with the server last time, and the port information in the server configuration data is information of a port currently bound by the server; and
when the port information in the client configuration data is different from the port information in the server configuration data, updating (602) the client configuration data with the port information in the server configuration data, wherein a port indicated by port information in updated client configuration data is capable of being used for establishing a communication connection between the client and the server.

6. The method according to claim 5, further comprising:
detecting a binding condition of a port indicated by the port information in the server configuration data; and
in response to that the port indicated by the port information in the server configuration data is bound by another server,
re-determining a port among ports that are not bound by another server;
updating the server configuration data with port information of the re-determined port.

7. The method according to claim 6, wherein the updating (602) the server configuration data with the port information of the re-determined port is performed after re-determining, for all ports bound by another server, ports among the ports that are not bound by another server; or,
the updating (602) the server configuration data with the port information of the re-determined port is performed each time a port bound by another server is determined and a port is re-determined among the ports that are not bound by another server.

8. The method according to claim 5, wherein reading (601) the port information in the client configuration data and reading the port information in the server configuration data comprises:
based on management configuration data of the port management side, reading the port information in the client configuration data and reading the port information in the server configuration data, wherein the management configuration data comprises configuration data management information which is for determining port information of at least one pair of a client and a server to be synchronized.

9. The method according to claim 8, wherein the configuration data management information comprises one or more of a port type, a storage path of configuration data, and a storage location of port information in the configuration data;
the management configuration data comprises a plurality of groups of configuration data management information, and each group of configuration data management information comprises one piece of server configuration data management information and a plurality of pieces of client configuration data management information, wherein one or more clients corresponding to the plurality of pieces of client configuration data management information are clients that need to establish a communication connection with a server corresponding to the server configuration data management information.

10. A method for establishing a communication connection, **characterized by** the method being performed by a server and comprising:
in a case that a binding between the server and a first port fails, determining (1101) a second port that is capable of being used for the binding; and
updating (1102) server configuration data with port information of the second port, so that a client reads port information in target configuration data in a case that establishing a communication connection with the server based on the first port fails;
wherein the target configuration data is client configuration data or the server configuration data;
wherein in a case where the target configuration data is the client configuration data, the target configuration data is data updated based on the server configuration data;
in a case where the target configuration data is the server configuration data, the client obtains the server configuration data from another device.

11. An electronic device (1500), **characterized by** comprising:
a processor (1501); and
a memory (1502) storing instructions executable by the processor (1501);
wherein the processor (1501) is configured to execute the instructions and realize the steps of the method according to any one of claims 1-4, or the processor (1501) is configured to execute the instructions and realize the steps of the method according to any one of claims 5-9, or the processor (1501) is configured to execute the instructions and realize the steps of the method according to claim 10.

12. A computer-readable storage medium storing a computer program, **characterized in that** when executed by a processor, the computer program realizes the steps of the method according to any one of claims 1-4, or realizes the steps of the method according to any one of claims 5-9, or realizes the steps of the method according to claim 10.

13. A computer program product comprising instructions, **characterized in that** when run on a computer, the instructions realizes the steps of the method according to any one of claims 1-4, or realizes the steps of the method according to any one of claims 5-9, or realizes the steps of the method according to claim 10.

14. A computer program, **characterized in that** when executed by a processor, the computer program realizes the steps of the method according to any one of claims 1-4, or realizes the steps of the method according to any one of claims 5-9, or realizes the steps of the method according to claim 10.

## Patentansprüche

1. Verfahren zum Aufbauen einer Kommunikationsverbindung, **dadurch gekennzeichnet, dass** das Verfahren von einem Client durchgeführt wird und Folgendes umfasst:
Aufbauen (201) einer Kommunikationsverbindung mit einem Server basierend auf einem ersten Port, wobei der erste Port ein Port ist, der von dem Client und dem Server ausgehandelt wird, oder der erste Port ein Port ist, der verwendet wurde, als der Client das letzte Mal mit dem Server kommunizierte;
falls das Aufbauen der Kommunikationsverbindung mit dem Server basierend auf dem ersten Port fehlschlägt,
Lesen (202) von Port-Informationen in Zielkonfigurationsdaten, wobei die Zielkonfigurationsdaten Client-Konfigurationsdaten oder Server-Konfigurationsdaten sind;
wobei, falls die Zielkonfigurationsdaten die Client-Konfigurationsdaten sind, die Zielkonfigurationsdaten Daten sind, die basierend auf den Server-Konfigurationsdaten aktualisiert werden;
falls die Zielkonfigurationsdaten die Server-Konfigurationsdaten sind, der Client die Server-Konfigurationsdaten von einer anderen Vorrichtung erhält; und
ein zweiter Port, der durch die gelesenen Port-Informationen in den Zielkonfigurationsdaten angegeben wird, zum Aufbauen einer Kommunikationsverbindung zwischen dem Client und dem Server verwendet werden kann, Aufbauen (203) einer Kommunikationsverbindung mit dem Server basierend auf dem zweiten Port.

2. Verfahren nach Anspruch 1, wobei das Aufbauen (201) der Kommunikationsverbindung mit dem Server basierend auf dem ersten Port Folgendes umfasst:
Senden einer Verbindungsanfragenachricht an den Server über den ersten Port;
als Reaktion auf Empfangen keiner Verbindungsantwortnachricht von dem Server, Zählen einer Anzahl von Verbindungsfehlschlägen, wobei sich die Anzahl von Verbindungsfehlschlägen auf eine Anzahl von Malen bezieht, die die Verbindungsanfragenachricht über den ersten Port gesendet wird und keine Verbindungsantwortnachricht empfangen wird;
als Reaktion darauf, dass die Anzahl von Verbindungsfehlschlägen kleiner oder gleich einem Schwellwert der Anzahl von Verbindungsfehlschlägen ist,
Zurückkehren zum Senden der Verbindungsanfragenachricht an den Server über den ersten Port, und
als Reaktion darauf, dass die Anzahl von Verbindungsfehlschlägen größer als der Schwellwert der Anzahl von Verbindungsfehlschlägen ist,
Bestimmen, dass das Aufbauen der Kommunikationsverbindung mit dem Server basierend auf dem ersten Port fehlschlägt.

3. Verfahren nach Anspruch 1, wobei der zweite Port durch den Server bestimmt wird, wenn eine Bindung zwischen dem Server und dem ersten Port fehlschlägt; oder
der zweite Port durch eine Port-Verwaltungsseite bestimmt wird, wenn eine Bindung zwischen dem Server und dem ersten Port fehlschlägt.

4. Verfahren nach Anspruch 1, wobei, falls die Zielkonfigurationsdaten die Client-Konfigurationsdaten sind, die Client-Konfigurationsdaten durch eine Port-Verwaltungsseite basierend auf den Server-Konfigurationsdaten verwaltet werden.

5. Verfahren zum Aufbauen einer Kommunikationsverbindung, **dadurch gekennzeichnet, dass** es von einer Port-Verwaltungsseite durchgeführt wird und Folgendes umfasst:
Lesen (601) von Port-Informationen in Client-Konfigurationsdaten und Lesen von Port-Informationen in Server-Konfigurationsdaten, wobei ein Port, der durch die Port-Informationen in den Client-Konfigurationsdaten angegeben wird, ein Port ist, der von einem Client und einem Server ausgehandelt wird, oder ein Port ist, der verwendet wurde, als der Client das letzte Mal mit dem Server kommunizierte, und die Port-Informationen in den Server-Konfigurationsdaten Informationen eines Ports sind, der gegenwärtig von dem Server gebunden wird; und
wenn sich die Port-Informationen in den Client-Konfigurationsdaten von den Port-Informationen in den Server-Konfigurationsdaten unterscheiden, Aktualisieren (602) der Client-Konfigurationsdaten mit den Port-Informationen in den Server-Konfigurationsdaten, wobei ein Port, der durch Port-Informationen in aktualisierten Client-Konfigurationsdaten angegeben wird, zum Aufbauen einer Kommunikationsverbindung zwischen dem Client und dem Server verwendet werden kann.

6. Verfahren nach Anspruch 5, das ferner Folgendes umfasst:
Detektieren einer Bindungsbedingung eines Ports, der durch die Port-Informationen in den Server-Konfigurationsdaten angegeben wird; und
als Reaktion darauf, dass der Port, der durch die Port-Informationen in den Server-Konfigurationsdaten angegeben wird, von einem anderen Server gebunden wird,
Neubestimmen eines Ports aus Ports, die nicht von einem anderen Server gebunden werden;
Aktualisieren der Server-Konfigurationsdaten mit Port-Informationen des neubestimmten Ports.

7. Verfahren nach Anspruch 6, wobei das Aktualisieren (602) der Server-Konfigurationsdaten mit den Port-Informationen des neubestimmten Ports nach dem Neubestimmen von Ports aus den Ports, die nicht von einem anderen Server gebunden werden, für alle Ports, die von einem anderen Server gebunden werden, durchgeführt wird; oder
das Aktualisieren (602) der Server-Konfigurationsdaten mit den Port-Informationen des neubestimmten Ports jedes Mal durchgeführt wird, wenn ein Port, der von einem anderen Server gebunden wird, bestimmt wird und ein Port aus den Ports, die nicht von einem anderen Server gebunden werden, neubestimmt wird.

8. Verfahren nach Anspruch 5, wobei das Lesen (601) der Port-Informationen in den Client-Konfigurationsdaten und das Lesen der Port-Informationen in den Server-Konfigurationsdaten Folgendes umfasst:
basierend auf Verwaltungskonfigurationsdaten der Port-Verwaltungsseite, Lesen der Port-Informationen in den Client-Konfigurationsdaten und Lesen der Port-Informationen in den Server-Konfigurationsdaten, wobei die Verwaltungskonfigurationsdaten Konfigurationsdatenverwaltungsinformationen umfassen, die zum Bestimmen von Port-Informationen von mindestens einem Paar eines Clients und eines Servers, die zu synchronisieren sind, dienen.

9. Verfahren nach Anspruch 8, wobei die Konfigurationsdatenverwaltungsinformationen einen oder mehrere von einem Port-Typ, einem Speicherpfad von Konfigurationsdaten und einem Speicherort von Portinformationen in den Konfigurationsdaten umfassen; die Verwaltungskonfigurationsdaten eine Vielzahl von Gruppen von Konfigurationsdatenverwaltungsinformationen umfassen und jede Gruppe von Konfigurationsdatenverwaltungsinformationen ein Element von Server-Konfigurationsdatenverwaltungsinformationen und eine Vielzahl von Elementen von Client-Konfigurationsdatenverwaltungsinformationen umfasst, wobei ein oder mehrere Clients, die der Vielzahl von Elementen von Client-Konfigurationsdatenverwaltungsinformationen entsprechen, Clients sind, die eine Kommunikationsverbindung mit einem Server aufbauen müssen, der den Server-Konfigurationsdatenverwaltungsinformationen entspricht.

10. Verfahren zum Aufbauen einer Kommunikationsverbindung, **dadurch gekennzeichnet, dass** das Verfahren von einem Server durchgeführt wird und Folgendes umfasst:
falls eine Bindung zwischen dem Server und einem ersten Port fehlschlägt, Bestimmen (1101) eines zweiten Ports, der für die Bindung verwendet werden kann; und Aktualisieren (1102) von Server-Konfigurationsdaten mit Port-Informationen des zweiten Ports, so dass ein Client Port-Informationen in Zielkonfigurationsdaten liest, falls ein Aufbauen einer Kommunikationsverbindung mit dem Server basierend auf dem ersten Port fehlschlägt; wobei die Zielkonfigurationsdaten Client-Konfigurationsdaten oder die Server-Konfigurationsdaten sind;
wobei, falls die Zielkonfigurationsdaten die Client-Konfigurationsdaten sind, die Zielkonfigurationsdaten Daten sind, die basierend auf den Server-Konfigurationsdaten aktualisiert werden;
falls die Zielkonfigurationsdaten die Server-Konfigurationsdaten sind, der Client die Server-Konfigurationsdaten von einer anderen Vorrichtung erhält.

11. Elektronische Vorrichtung (1500), **dadurch gekennzeichnet, dass** sie Folgendes umfasst:
einen Prozessor (1501); und
einen Speicher (1502), der Befehle speichert, die durch den Prozessor (1501) ausführbar sind;
wobei der Prozessor (1501) dazu eingerichtet ist, die Befehle auszuführen und die Schritte des Verfahrens nach einem der Ansprüche 1 bis 4 zu realisieren, oder der Prozessor (1501) dazu eingerichtet ist, die Befehle auszuführen und die Schritte des Verfahrens nach einem der Ansprüche 5 bis 9 zu realisieren, oder der Prozessor (1501) dazu eingerichtet ist, die Befehle auszuführen und die Schritte des Verfahrens nach Anspruch 10 zu realisieren.

12. Computerlesbares Speichermedium, das ein Computerprogramm speichert, **dadurch gekennzeichnet, dass** das Computerprogramm, wenn es von einem Prozessor ausgeführt wird, die Schritte des Verfahrens nach einem der Ansprüche 1 bis 4 realisiert oder die Schritte des Verfahrens nach einem der Ansprüche 5 bis 9 realisiert oder die Schritte des Verfahrens nach Anspruch 10 realisiert.

13. Computerprogrammprodukt, das Befehle umfasst, **dadurch gekennzeichnet, dass** die Befehle, wenn sie auf einem Computer ausgeführt werden, die Schritte des Verfahrens nach einem der Ansprüche 1 bis 4 realisieren oder die Schritte des Verfahrens nach einem der Ansprüche 5 bis 9 realisieren oder die Schritte des Verfahrens nach Anspruch 10 realisieren.

14. Computerprogramm, **dadurch gekennzeichnet, dass** das Computerprogramm, wenn es von einem Prozessor ausgeführt wird, die Schritte des Verfahrens nach einem der Ansprüche 1 bis 4 realisiert oder die Schritte des Verfahrens nach einem der Ansprüche 5 bis 9 realisiert oder die Schritte des Verfahrens nach Anspruch 10 realisiert.

## Revendications

1. Procédé d'établissement d'une connexion de communication, **caractérisé en ce que** le procédé est réalisé par un dispositif client et comprend :
l'établissement (201) d'une connexion de communication avec un serveur sur la base d'un premier port, dans lequel le premier port est un port négocié par le dispositif client et le serveur, ou le premier port est un port utilisé lorsque le dispositif client a communiqué la dernière fois avec le serveur ;
dans un cas où l'établissement de la connexion de communication avec le serveur sur la base du premier port échoue,
la lecture (202) d'informations de port dans des données de configuration cible, dans lequel les données de configuration cible sont des données de configuration de dispositif client ou des données de configuration de serveur ;
dans lequel, dans un cas où les données de configuration cible sont les données de configuration de dispositif client, les données de configuration cible sont des données mises à jour sur la base des données de configuration de serveur ;
dans un cas où les données de configuration cible sont les données de configuration de serveur, le dispositif client obtient les données de configuration de serveur d'un autre dispositif ; et
un second port indiqué par les informations de port lues dans les données de configuration cible pouvant être utilisé pour établir une connexion de communication entre le dispositif client et le serveur, l'établissement (203) d'une connexion de communication avec le serveur sur la base du second port.

2. Procédé selon la revendication 1, dans lequel l'établissement (201) de la connexion de communication avec le serveur sur la base du premier port comprend :
l'envoi d'un message de demande de connexion au serveur par l'intermédiaire du premier port ;
en réponse à la réception d'aucun message de réponse de connexion du serveur, le comptage d'un nombre d'échecs de connexion, dans lequel le nombre d'échecs de connexion fait référence à un nombre de fois où le message de demande de connexion est envoyé par l'intermédiaire du premier port et où aucun message de réponse de connexion n'est reçu ;
en réponse au fait que le nombre d'échecs de connexion est inférieur ou égal à un seuil du nombre d'échecs de connexion,
le retour à l'envoi du message de demande de connexion au serveur par l'intermédiaire du premier port, et
en réponse au fait que le nombre d'échecs de connexion est supérieur au seuil du nombre d'échecs de connexion,
la détermination que l'établissement de la connexion de communication avec le serveur sur la base du premier port échoue.

3. Procédé selon la revendication 1, dans lequel le second port est déterminé par le serveur lorsqu'un établissement de connexion entre le serveur et le premier port échoue ; ou,
le second port est déterminé par une partie de gestion de port lorsqu'un établissement de connexion entre le serveur et le premier port échoue.

4. Procédé selon la revendication 1, dans lequel, dans le cas où les données de configuration cible sont les données de configuration de dispositif client, les données de configuration de dispositif client sont gérées par une partie de gestion de port sur la base des données de configuration de serveur.

5. Procédé d'établissement d'une connexion de communication, **caractérisé en ce qu'**il est réalisé par une partie de gestion de port et comprend :
la lecture (601) d'informations de port dans des données de configuration de dispositif client et la lecture d'informations de port dans des données de configuration de serveur, dans lequel un port indiqué par les informations de port dans les données de configuration de dispositif client est un port négocié par un dispositif client et un serveur, ou un port utilisé lorsque le dispositif client a communiqué la dernière fois avec le serveur, et les informations de port dans les données de configuration de serveur sont des informations d'un port actuellement connecté au serveur ; et
lorsque les informations de port dans les données de configuration de dispositif client sont différentes des informations de port dans les données de configuration de serveur, la mise à jour (602) des données de configuration de dispositif client avec les informations de port dans les données de configuration de serveur, dans lequel un port indiqué par des informations de port dans des données de configuration de dispositif client mises à jour peut être utilisé pour établir une connexion de communication entre le dispositif client et le serveur.

6. Procédé selon la revendication 5, comprenant en outre :
la détection d'une condition d'établissement de connexion d'un port indiqué par les informations de port dans les données de configuration de serveur ; et
en réponse au fait que le port indiqué par les informations de port dans les données de configuration de serveur est connecté à un autre serveur,
la redétermination d'un port parmi des ports qui ne sont pas connectés à un autre serveur ;
la mise à jour des données de configuration de serveur avec des informations de port du port redéterminé.

7. Procédé selon la revendication 6, dans lequel la mise à jour (602) des données de configuration de serveur avec les informations de port du port redéterminé est réalisée après la redétermination, pour tous les ports connectés à un autre serveur, de ports parmi les ports qui ne sont pas connectés à un autre serveur ; ou,
la mise à jour (602) des données de configuration de serveur avec les informations de port du port redéterminé est réalisée chaque fois qu'un port connecté à un autre serveur est déterminé et qu'un port est redéterminé parmi les ports qui ne sont pas connectés à un autre serveur.

8. Procédé selon la revendication 5, dans lequel la lecture (601) des informations de port dans les données de configuration de dispositif client et la lecture des informations de port dans les données de configuration de serveur comprennent :
sur la base de données de configuration de gestion de la partie de gestion de port, la lecture des informations de port dans les données de configuration de dispositif client et la lecture des informations de port dans les données de configuration de serveur,
dans lequel les données de configuration de gestion comprennent des informations de gestion de données de configuration qui sont destinées à déterminer des informations de port d'au moins une paire d'un dispositif client et d'un serveur à synchroniser.

9. Procédé selon la revendication 8, dans lequel les informations de gestion de données de configuration comprennent un ou plusieurs éléments parmi un type de port, un cheminement de stockage de données de configuration, et un emplacement de stockage d'informations de port dans les données de configuration ;
les données de configuration de gestion comprennent une pluralité de groupes d'informations de gestion de données de configuration, et chaque groupe d'informations de gestion de données de configuration comprend un élément d'informations de gestion de données de configuration de serveur et une pluralité d'éléments d'informations de gestion de données de configuration de dispositif client, dans lequel un ou plusieurs dispositifs clients correspondant à la pluralité d'éléments d'informations de gestion de données de configuration de dispositif client sont des dispositifs clients qui doivent établir une connexion de communication avec un serveur correspondant aux informations de gestion de données de configuration de serveur.

10. Procédé d'établissement d'une connexion de communication, **caractérisé en ce que** le procédé est réalisé par un serveur et comprend :
dans un cas où un établissement de connexion entre le serveur et un premier port échoue, la détermination (1101) d'un second port qui peut être utilisé pour l'établissement de connexion ; et
la mise à jour (1102) de données de configuration de serveur avec des informations de port du second port, de sorte qu'un dispositif client lit des informations de port dans des données de configuration cible dans un cas où l'établissement d'une connexion de communication avec le serveur sur la base du premier port échoue ; dans lequel les données de configuration cible sont des données de configuration de dispositif client ou les données de configuration de serveur ;
dans lequel, dans un cas où les données de configuration cible sont les données de configuration de dispositif client, les données de configuration cible sont des données mises à jour sur la base des données de configuration de serveur ;
dans un cas où les données de configuration cible sont les données de configuration de serveur, le dispositif client obtient les données de configuration de serveur d'un autre dispositif.

11. Dispositif électronique (1500), **caractérisé en ce qu'**il comprend :
un processeur (1501) ; et
une mémoire (1502) stockant des instructions exécutables par le processeur (1501) ;
dans lequel le processeur (1501) est configuré pour exécuter les instructions et réaliser les étapes du procédé selon l'une quelconque des revendications 1 à 4, ou le processeur (1501) est configuré pour exécuter les instructions et réaliser les étapes du procédé selon l'une quelconque des revendications 5 à 9, ou le processeur (1501) est configuré pour exécuter les instructions et réaliser les étapes du procédé selon la revendication 10.

12. Support de stockage lisible par ordinateur stockant un programme informatique, **caractérisé en ce que**, lorsqu'il est exécuté par un processeur, le programme informatique réalise les étapes du procédé selon l'une quelconque des revendications 1 à 4, ou réalise les étapes du procédé selon l'une quelconque des revendications 5 à 9, ou réalise les étapes du procédé selon la revendication 10.

13. Produit de programme informatique comprenant des instructions, **caractérisé en ce que**, lorsqu'il est exécuté sur un ordinateur, les instructions réalisent les étapes du procédé selon l'une quelconque des revendications 1 à 4, ou réalisent les étapes du procédé selon l'une quelconque des revendications 5 à 9, ou réalisent les étapes du procédé selon la revendication 10.

14. Programme informatique, **caractérisé en ce que**, lorsqu'il est exécuté par un processeur, le programme informatique réalise les étapes du procédé selon l'une quelconque des revendications 1 à 4, ou réalise les étapes du procédé selon l'une quelconque des revendications 5 à 9, ou réalise les étapes du procédé selon la revendication 10.
